# EUROPEAN PATENT SPECIFICATION

(11) **EP 1 361 069 B1**
(45) Date of publication and mention of the grant of the patent: **01.06.2005**
(21) Application number: 03252018.1
(22) Date of filing: 31.03.2003
(51) Int. Cl.: B41J 2/47, H04N 1/036

(54) **Color laser printer**
Farblaserdrucker
Imprimante laser couleur

(30) Priority: 10.05.2002 KR 2002025907
(43) Date of publication of application: 12.11.2003
(73) Proprietor: SAMSUNG ELECTRONICS CO., LTD., Suwon-City, Kyungki-do (KR)
(72) Inventor: Sung, Bu-hyun, Paldal-gu, Suwon-si, Gyeonggi-do (KR); Lee, Chul-woo, Bundang-gu, Seongnam-si, Gyeonggi-do (KR); Hong, Soon-kyo, Seocho-gu, Seoul (KR); Huh, Young-woo, Suwon-si, Gyeonggi-do (KR)
(74) Representative: Robinson, Ian Michael

(56) References cited:
- US-A- 4 760 407
- US-A- 5 638 393
- US-A- 6 061 079

## Description

The present invention relates to a color laser printer, and more particularly, to a color laser printer which produces a color image using a single laser scanning unit.

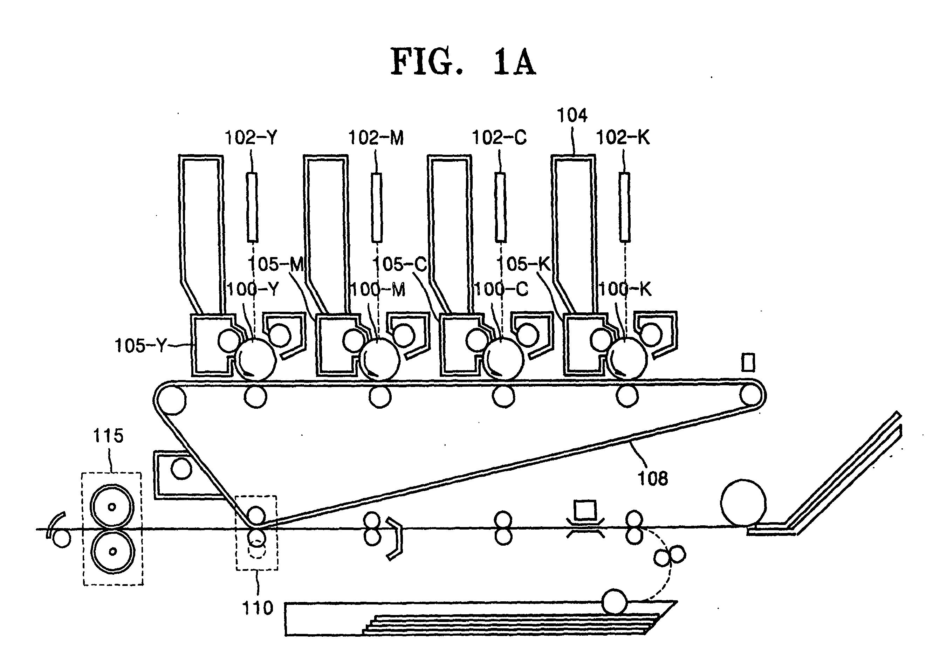

Monochrome laser printers use a single laser scanning unit (LSU) and a single organic photoconductive cell (OPC) drum since they transfer only black ink onto a sheet of paper. In contrast, color laser printers need four LSUs and four OPC drums to transfer four ink colors such as black (B), magenta (M), yellow (Y), and cyan (C) onto a piece of sheet. As shown in Figure 1A, a color laser printer includes: OPC drums 100-K, 100-C, 100-M, and 100-Y for black, cyan, magenta, and yellow, respectively; LSUs 102-K, 102-C, 102-M, and 102-Y for forming electrostatic latent images by scanning laser beams over the photoconductor drums 100-K, 100-C, 100-M, and 100-Y electrically charged to a predetermined potential; developing units 105-K, 105-C, 105-M, and 105-Y for developing electrostatic latent images with four color developing solutions; a transfer belt 108 for transferring images developed on the OPC drums 100-K, 100-C, 100-M, and 100-Y; a transfer unit 115 for transferring a four color image superimposed on the transfer belt 108 onto a paper sheet P; and a fixing unit 115 for fixing the transferred image on the paper sheet P by applying heat and pressure. Reference numeral 104 denotes a toner container.

As described above, to produce a color image, the conventional color laser printer uses the OPC drums 100-K, 100-C, 100-M, and 100-Y for black, cyan, magenta, and yellow, respectively, and the four LSUs 102-K, 102-C, 102-M, and 102-Y corresponding to the four colors.

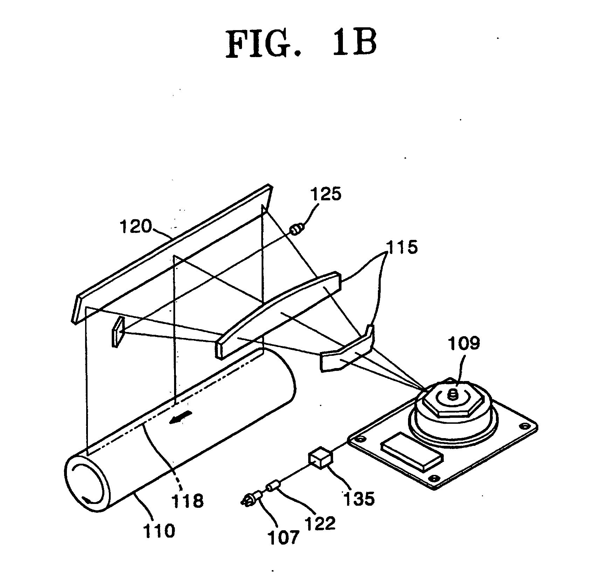

An LSU is a device that scans a laser beam over a photoconductive medium such as an OPC drum and forms an electrostatic latent image. Referring to Figure 1B, a typical LSU consists of a light source 107, a rotary polygon mirror 109 driven by a motor (not shown) to rotate and reflects a beam emitted by the light source 107, an f-θ lens 115 for focusing the beam reflected by the rotating polygon mirror 109 into a spot of an appropriate diameter along a scanning line 118 on the surface of a photoconductive drum 110, and a reflector 120 disposed in an optical path between the f-θ lens 115 and the photoconductive drum 110 for reflecting incident beam so that the beam passing through the f-θ lens 115 is directed toward the photoconductive drum 110. A predetermined electrostatic latent image is formed on the photoconductive drum 110 by controlling the on/off status of the light source 107.

Furthermore, a collimating lens 122 for converting the incident beam into a parallel beam to the axis of the collimating lens 122, and a cylindrical lens 135 for converging the parallel beam to a reflective surface of the rotary polygon mirror 109 are disposed along an optical path between the light source 107 and the rotary polygon mirror 109. Reference numeral 125 denotes a sensor for detecting a position where the scanning line 118 starts.

Here, the beam coming from the light source 107 is converted into a parallel beam by the collimating lens 122, and the parallel beam passes through the cylindrical lens 135 and is reflected by the rotary polygon mirror 109. The beam reflected off the rotary polygon mirror 109 passes through the f-θ lens 115, and the path of the beam is changed by the reflector 120 so that the beam is focused into a spot at a point along the scanning line 118 on the photoconductive drum 110.

The color laser printer configured as above has not yet become popular due to high manufacturing costs. The price of LSUs represents the largest percentage of the total cost of a color laser printer. Therefore, one way to reduce the cost of a color laser printer is to minimize the number of LSUs used therein.

Another problem with this type of color laser printer is that jitter and periodic oscillation occurring from a spindle motor driving a rotary polygon mirror for each color vary with each LSU. This causes the four colors to be printed along different lines when a single line is printed on a paper sheet, thus lowering the printing quality. To solve these problems, conventional color laser printers require an electrical, mechanical, or optical adjustment for the jitter and periodic oscillation. However, this process increases the manufacturing costs.

Most recently, in order to reduce the manufacturing costs, research on minimizing the number of LSUs has been conducted. An example of conventional color laser printers having a single LSU is disclosed in Japanese Laid Open Patent Application No. 2000-43333A. Referring to Figure 2, this conventional color laser printer consists of a spindle motor 142, a rotating polygon mirror 143, and first through fourth laser diodes 140a-140d arranged in parallel so that a beam emitted from each of the diodes 140a-140d strikes the rotating polygon mirror 143 at a different incidence angle.

In the color laser printer configured as above, four beams are reflected through the rotating polygon mirror 143 at different angles, which requires an f-θ lens 145 of large thickness. However, as is well-known, f-θ lenses of large thickness are more difficult to manufacture.

Furthermore, the beams reflected off the rotating polygon mirror 143 have different focal distances with respect to reflectors 144a-144d, through which each beam is respectively reflected, and with respect to first through fourth photoconductive drums 147a-147d on which each beam is respectively focused. Due to their different focal distances, a spot for each color is formed at a different position on each of the photoconductive drums 147a-147d, and therefore, first through fourth correcting lens 146a-146d are separately provided to make the image differences equal. Overall, this construction increases the manufacturing and assembly costs. Further, when compared with a color laser printer using four LSUs, this color laser printer has a limited advantage in terms of the optical characteristics.

Another example of conventional color laser printers is disclosed in U. S. Patent No. 6,061,079. Referring to Figure 3A, this color laser printer has a similar configuration in some respects with the Japanese Laid Open Patent Application No. 2000-43333A cited earlier. That is, the color laser printer includes a spindle motor 152, a rotating polygon mirror 153, and first through fourth laser diodes 150a-150d arranged in parallel (i.e., sequentially in a longitudinal direction) so that a beam emitted from each of the diodes 150a-150d is incident upon the rotating polygon mirror 153 at a different angle.

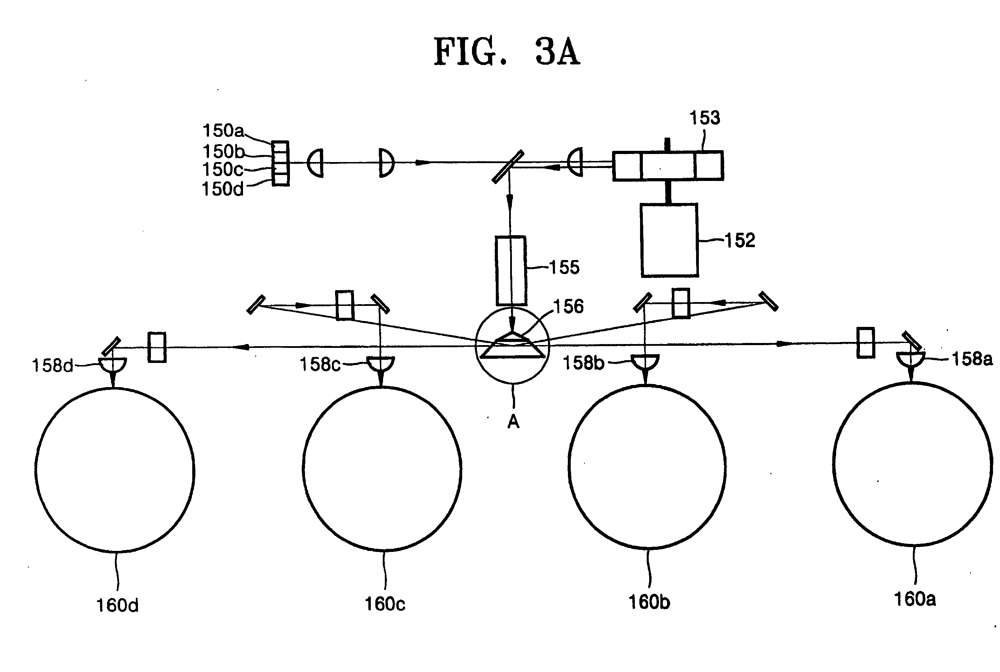

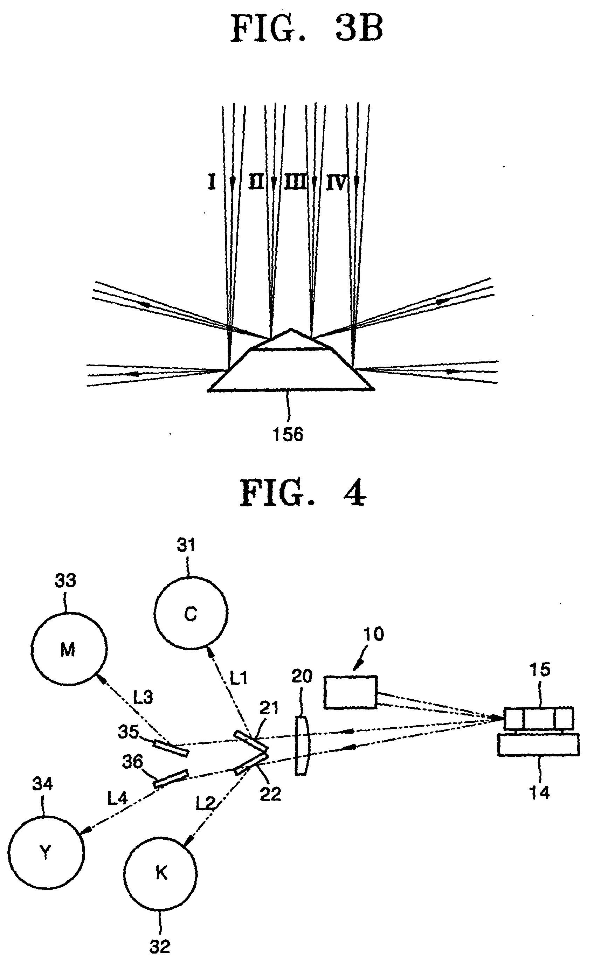

In the color laser printer shown in Figure 3A, the distance between an f-θ lens 155, through which the four beams reflected by the rotating polygon mirror 153 pass, and each of first through fourth photoconductive drum 160a-160d for different colors on which the beams are focused, is equal. As shown in Figure 3B, each of first through fourth beams I, II, III and IV, reflected by the f-θ lens 155 so as to take different paths, is reflected through a prism-type reflector 156, and focused near each of the photoconductive drums 160a-160d, corresponding to each color, through each of cylindrical lens 158a-158d.

However, one drawback of the color laser printer configured as above is that the thickness of f-θ lens 155 is large since each of the four beams I, II, III and IV passes through the lens at different vertical positions. As described above, this makes it difficult to manufacture the f-θ lens 155 while increasing the manufacturing costs. Another drawback arises from the fact that separate cylindrical lenses 158a, 158b, 158c, and 158d are used to focus the four light beams near the photoconductive drums. Since the four cylindrical lenses 158a, 158b, 158c, and 158d cause different amounts of aberration and lead to an assembly error when combined together. As a result, despite the use of only one LSU, a single line command results in the four colors printed along different lines, thus lowering the printing quality.

US 5638393 has been identified as the closest prior art. This document discloses a conventional colour laser printer including four or more closely spaced laser sources arranged in a line. The beams are thus emitted in parallel with each emitted beam being incident on a rotated polygon mirror at a different angle. The beams are then focused by means of a f-θ lens. The f-θ lens needs to be of sufficient thickness to allow each of the four beams to pass through the lens at a different position. A polarised beam separator then separates the beams by reflecting beams with a first polarisation and transmitting beams with a second polarisation. The beams are directed to respective photoreceptors by means of further mirrors and optical filters.

US 4760407 discloses a further laser printing device having a double beam scanning system. Two perpendicularly polarised lights are passed into a polarising prism and combined to form a single optical beam. The optical beam is reflected from a photosensitive drum before being focused by a f-θ lens directly onto a photosensitive drum.

An aim of the present invention is to provide a colour laser printer with a small and cost effective construction. A preferred aim of the present invention is to provide a colour laser printer where laser scanning units are reduced in cost and complexity. Another aim of at least preferred embodiments of the present invention is to provide a colour laser printer with improved printing quality, in particular to improve alignment of each colour when printed on a paper sheet. A particularly preferred aim of the present invention is to provide a colour laser printer which solves each of these problems, and which does not require an F-θ lens of large thickness.

The present invention provides a color laser printer constructed to use an f-θ lens of reduced thickness, by disposing a plurality of light sources separately and passing light signals through the f-θ lens after combining beams emitted from the plurality of light sources through a polarization prism, in order to make equal the lengths of optical paths between the f-θ lens and a photoconductive unit for each color by using a plurality of optical path changing units.

According to the present invention there is provided an apparatus and method as set forth in the appended claims. Preferred features of the invention will be apparent from the dependent claims, and the description which follows.

In one aspect of the present invention, there is provided a color laser printer for producing a color image using a single laser scanning unit. The color laser printer includes: a lighting unit including first and second laser diodes and third and fourth laser diodes; a rotary polygon mirror that reflects the beams from the lighting unit; an f-θ lens that focuses the beams reflected by the rotary polygon mirror; first and second polarization beam splitters, each of which transmits or reflects the beams passing through the f-θ lens depending on the direction of polarization; and first through fourth photoconductive units on which the beams reflected and transmitted through the first and second polarization beam splitters are incident. In the color laser printer, the first and second laser diodes emit beams of one polarization, the lighting unit further includes a polarization prism for transmitting or reflecting incident beams depending on the direction of polarization, and the third and fourth laser diodes are disposed in a different direction from the first and second laser diodes with respect to the polarization prism; the rotary polygon mirror reflects the beams emitted along the same path from the lighting unit; the lengths of optical paths between the f-θ lens and each of the first through fourth photoconductive units are equal. The color laser printer further includes an optical path changing means disposed in paths along which the beams transmitted through the first and second polarization beam splitters respectively travel.

The present invention also provides a color laser printer for producing a color image using a single laser scanning unit including: a lighting unit including first and second laser diodes and third and fourth laser diodes; a rotary polygon mirror that reflects the beam emitted along the same path from the lighting unit; an f-θ lens that focuses the beam reflected by the rotary polygon mirror; a first optical path changing means that divides the beams passing through the f-θ lens into first and second beams traveling along two optical paths; first and second polarization beam splitters, each of which transmits or reflects the first and second beams divided by the first optical path changing means depending on the direction of polarization; and first through fourth photoconductive units on which the beams reflected and transmitted through the first and second polarization beam splitters are incident. In the color laser printer, the first and second laser diodes emit beams of one polarization, the lighting unit further includes a polarization prism for transmitting or reflecting incident beams depending on the direction of polarization, and the third and fourth laser are diodes disposed in a different direction from the first and second laser diodes with respect to the polarization prism; the rotary polygon mirror reflects the beams emitted along the same path from the lighting unit; the lengths of optical paths between the f-θ lens and each of the first through fourth photoconductive units are equal.

Furthermore, the color laser printer includes second and third optical path changing means disposed in paths along which the beams reflected through the first and second polarization beam splitters respectively travel.

The printer further includes transmission-type plate glasses disposed between the first polarization beam splitter and the second optical path changing means and between the second polarization beam splitter and the third optical path changing means. The printer further includes fourth and fifth optical path changing means disposed in paths along which the beams transmitted through the first and second polarization beam splitters respectively travel.

For a better understanding of the invention, and to show how embodiments of the same may be carried into effect, reference will now be made, by way of example, to the accompanying diagrammatic drawings in which:
Figure 1A shows a conventional color laser printer having four laser scanning units (LSUs);
Figure 1B shows the configuration of a conventional LSU;

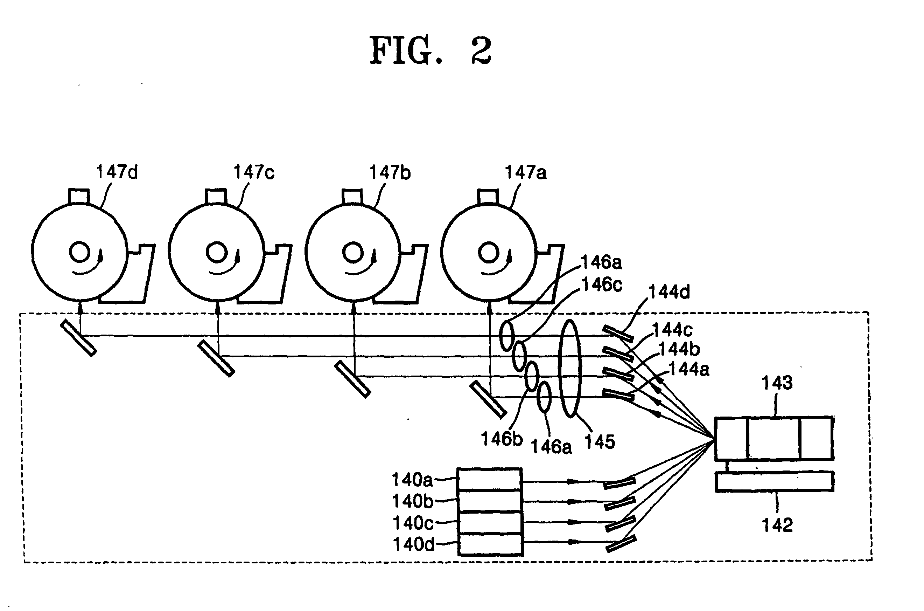

Figure 2 shows an example of conventional color laser printer;
Figure 3A shows another example of conventional color laser printer;
Figure 3B is an enlarged view of portion "A" of Figure 3A;
Figure 4 shows the configuration of a color laser printer according to a first embodiment of the present invention;
Figure 5 shows a lighting unit adopted in a color laser printer according to the present invention; and
Figure 6 shows the configuration of a color laser printer according to a second embodiment of the present invention.

Referring to Figure 4, a color laser printer according to a first preferred embodiment includes a lighting unit 10 having a plurality of light sources for emitting S-polarized and P- polarized beams, a rotary polygon mirror 15 for reflecting the beams emitted from the lighting unit 10, an f-θ lens 20 for focusing the beams reflected by the rotary polygon mirror 15, and first and second polarization beam splitters 21 and 22 for transmitting or reflecting the beams passing through the f-θ lens 20 depending on the direction of polarization.

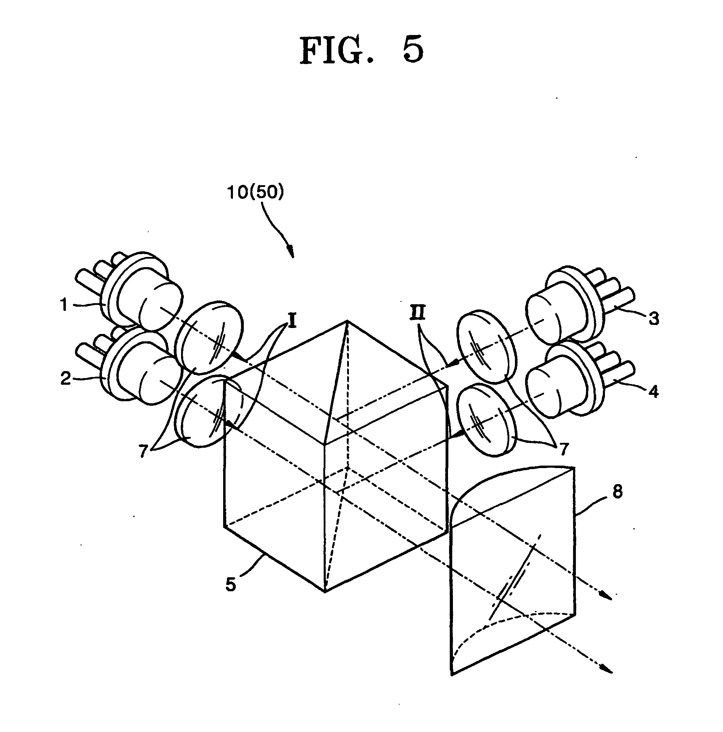

As shown in Figure 5, the lighting unit 10 consists of first and second laser diodes 1 and 2 for emitting beams of one polarization such as P-polarized beams, third and fourth laser diodes 3 and 4, disposed separately and in a different direction, from the first and second laser diodes 1 and 2, for emitting S-polarized beams, and a polarization prism 5 positioned at the intersection between optical paths of the first and second laser diodes 1 and 2 and the third and fourth laser diodes 3 and 4 and which transmits or reflects incident beams depending on the direction of polarization.

For example, the first laser diode 1 may be disposed above the second laser diode 2, both of which emit P-polarized beams. The third laser diode 3 may be disposed above the fourth laser diode 4, both of which emit S-polarized beams.

First and second beams I and II emitted along different optical paths from the first and second laser diodes 1 and 2 and the third and fourth laser diodes 3 and 4, respectively, are directed through the polarization prism 5 along the same optical path toward the rotary polygon mirror 15. A collimating lens 7 may be provided in every optical path between each of the first through fourth laser diodes 1, 2, 3, and 4 and the polarization prism 5 to convert the beam coming from each of the laser diodes 1, 2, 3, and 4 into a parallel beam. Furthermore, a cylindrical lens 8 may be provided to focus the beam passing through the polarization prism 5 onto the rotary polygon mirror 15.

P- and S-polarized beams emitted from the lighting unit 10 configured as above are reflected by the rotary polygon mirror 15 and pass through the f-θ lens 20. As a spindle motor 14 rotates the rotary polygon mirror 15, reflective surfaces continuously rotate so that the position where the beam is reflected is moved gradually to produce a scanning line. The S-polarized or P-polarized beam focused through the f-θ lens 20 enters the first and second polarization beam splitter 21 and 22.

The first and second polarization beam splitters 21 and 22 preferably have the same characteristics in that they reflect one of the S-polarized and P-polarized beams and transmits the other beam. For example, the two polarization beam splitters 21 and 22 may be designed to reflect an S-polarized beam and transmit a P-polarized beam. Conversely, they may also be designed to reflect a P-polarized beam and transmit an S-polarized beam.

It is preferable to dispose the first and second polarization beam splitters 21 and 22 so that the beam reflected through either one of the polarization beam splitters 21 and 22 may travel along different optical paths. For example, the first and second polarization beam splitters 21 and 22 may be of a plate type and disposed in a V shape. In contrast, cube-type polarization beam splitters may be adopted to dispose their mirror surfaces in a V-shape.

The beams reflected in the first and second polarization beam splitters 21 and 22 are incident on photoconductive units such as first and second photoconductive drums 31 and 32, respectively. Furthermore, the beams transmitted through the first and second polarization beam splitters 21 and 22 are incident on third and fourth photoconductive drums 33 and 34, respectively. Here, if the optical paths from the f-θ lens 20 to the first through fourth photoconductive drums 31, 32, 33, and 34 are denoted as first, second, third, and fourth optical paths L1, L2, L3, and L4, respectively, it is preferable to arrange the first through fourth photoconductive drums 31, 32, 33, and 34 such that the first through fourth optical paths L1, L2, L3, and L4 have an equal length (L1= L2=L3=L4).

Furthermore, first and second optical path changing units 35 and 36 may be provided between the first polarization beam splitter 21 and the third photoconductive drum 33 and between the second polarization beam splitter 22 and the fourth photoconductive drum 34. The first and second optical path changing units 35 and 35 may be used to make the lengths of the third and fourth optical paths L3 and L4 equal to that of the first and second optical paths L1 and L2. That is, the positions of the first and second optical path changing units 35 and 36 are changed to make the lengths of the first through fourth optical paths L1-L4 equal. Here, the optical path changing units 35 and 36 may be a reflector or polarization beam splitter.

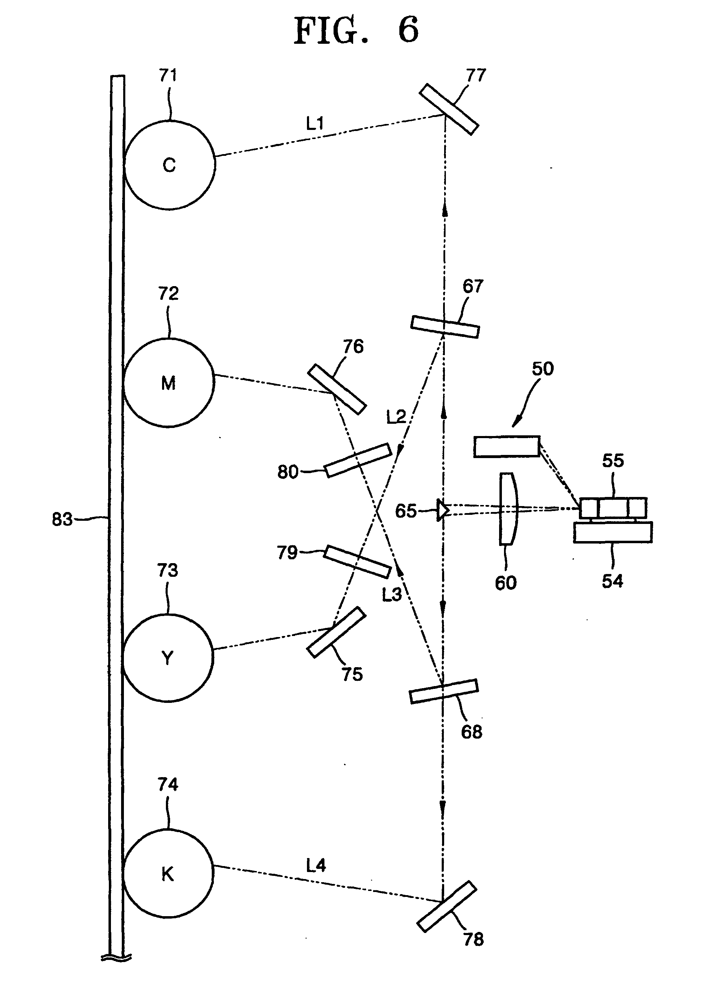

A color laser printer according to a second embodiment of the present invention will now be described with reference to Figure 6.

The color laser printer according to the second embodiment of the present invention includes a lighting unit 50 having a plurality of light sources for emitting s- and p- polarized beams, a rotary polygon mirror 55 for reflecting the beams emitted from the lighting unit 50, an f-θ lens 60 for focusing the beams reflected by the rotary polygon mirror 55, and a plurality of optical path changing units 65, 75, 76, 77, 78 for reflecting the beams passing through the f-θ lens 60 in different directions.

The lighting unit 50 has the same configuration as the light unit 10 in the first embodiment of this invention described above. That is, the lighting unit 50 consists of first and second laser diodes 1 and 2 for emitting beams in one direction, third and fourth laser diodes 3 and 4 disposed separately from the first and second laser diodes 1 and 2 for emitting beams polarized at a different angle, and a polarization prism 5 for transmitting or reflecting the beams coming from the first through fourth light sources 1-4 depending on the direction of polarization so that the beams travel along the same optical path.

The beam travelling through the lighting unit 50 along the same path then enters the first optical path changing unit 65 having first and second reflective surfaces 65a and 65b after passing through the rotary polygon mirror 55 and the f-θ lens 60. The beam passing through the f-θ lens 60 is reflected off the first and second reflective surfaces 65a and 65b to travel along two different optical paths. For example, the first optical path changing unit 65 may have a triangular or wedged cross-section to form the first and second reflective surfaces 65a and 65b.

First and second polarization beam splitters 67 and 68 for transmitting or reflecting incident beams depending on the direction of polarization are located in the two optical paths along which the beams travel through the first optical path changing unit 65. The two beams divided by the first optical path changing unit 65 are transmitted and reflected through the first and second polarization beam splitters 67 and 68 and split into four beams that travel along first through fourth optical paths L1-L4. The four beams split at the polarization beam splitters 67 and 68 are scanned onto the first through fourth photoconductive drums 71-74 corresponding to the respective beams. Here, it is preferable that the first through fourth optical paths L1-L4 from the first optical path changing unit 65 to the first through fourth photoconductive drums 71-74, respectively, have an equal length.

To make the lengths of first through fourth optical paths L1-L4 equal, the second and third optical path changing units 75 and 76 may be provided in optical paths between the first polarization beam splitter 67 and the third photoconductive drum 73 and between the second polarization beam splitter 68 and the second photoconductive drum 72, respectively. Furthermore, the fourth and fifth optical path changing units 77 and 78 may be provided in optical paths between the first polarization beam splitter 67 and the first photoconductive drum 71 and between the second polarization beam splitter 68 and the fourth photoconductive drum 74, respectively.

Transmission-type plate glass 79 and 80 are preferably provided in optical paths between the first polarization beam splitter 67 and the second optical path changing unit 75 and between the second beam polarization beam splitter 68 and the third optical path changing unit 76, respectively. The beams travelling along the first and fourth optical paths L1 and L4 have been transmitted through the first and second polarization beam splitters 67 and 68, respectively. Taking this into consideration, the transmission-type plate glasses 79 and 80 are provided to transmit the beams travelling along the second and third optical paths L2 and L3 so that they can have the same characteristics as the beams travelling along the first and fourth optical paths L1 and L4.

The operation of the color laser printer configured as above will now be described. The color laser printer according to the present invention is configured so that beams emitted into different directions from the first and second light sources 1 and 2 and the third and fourth light sources 3 and 4 disposed in different directions travel along the same path through the polarization prism 5. This configuration reduces the cross-sectional area of the entire beam when the beams emitted from the first through fourth light sources 1-4 travel along the same path through the polarization prism 5. In other words, this reduces the beam cross-sectional area compared with a conventional configuration where first through fourth light sources are arranged in parallel (i.e., sequentially in a longitudinal direction). This in turn reduces the cross-sectional area of beam incident on the f-θ lens 60 after being reflected by the rotary polygon mirror 55. This invention allows the use of the f-θ lens 60 having a relatively small thickness.

As the thickness of f-θ lens 60 decreases, it becomes easier to manufacture and offers better performance. In this way, the use of f-θ lens 60 easy to manufacture decreases the manufacturing cost while improving the productivity.

The beam passing though the f-θ lens 60 is divided by the first optical path changing unit 65 into two beams travelling along the two optical paths. The beams are transmitted or reflected through the first and second polarization beam splitters 67 and 68 depending on the polarization direction and split into four beams that travel along the first through fourth optical paths L1-L4. Then, the second through fifth optical path changing units 75-78 are disposed in such a way as to make the lengths of first through fourth optical paths L1-L4 equal. This eventually makes equal the focal distances between the f-θ lens 60 through which the beam passes and the photoconductive drums 71, 72, 73, and 74 for each color on which the beam is focused. Thus, it eliminates the need for a separate correcting lens for making focal distances equal.

Furthermore, the f-θ lens 60 that has a very small thickness provides accurate focusing onto the photoconductive drums 71, 72, 73, and 74, which eliminates the need for a separate means for focusing.

By operating as described above, the beams scanned onto the photoconductive drums 71, 72, 73, and 74 for each color are sequentially transferred to a transfer belt 83.

As described above, a color laser printer according to the present invention produces a color image using a single LSU, thereby significantly decreasing the manufacturing costs. Furthermore, the color laser printer uses one rotary polygon mirror and an f-θ lens, thereby reducing the assembling time and increasing the productivity. This is because it eliminates the need for electrical, mechanical, and optical adjustment which was required in a conventional color laser printer with four rotary polygon mirrors used to reduce fine jitter and periodic oscillation, respectively occurring from the spindle motors rotating the rotary polygon mirrors. Additionally, minimized jitter characteristics provide high speed printing and improved image quality.

Furthermore, the present invention is constructed such that a plurality of light sources for emitting beams of one polarization are arranged separately, and the beams emitted from the plurality of light sources are combined by a polarization prism to enter an f-θ lens, thereby requiring an f-θ lens of reduced thickness. Thus, this makes it easier to manufacture f-θ lenses with excellent performance.

Although a few preferred embodiments have been shown and described, it will be appreciated by those skilled in the art that various changes and modifications might be made without departing from the scope of the invention, as defined in the appended claims.

## Claims

1. A color laser printer for producing a color image using a single laser scanning unit, the color laser printer comprising:
a lighting unit including (10) first and second laser diodes (1,2) and third and fourth laser diodes (3,4);
a rotary polygon mirror (15) that reflects the beams from the lighting unit (10);
an f-θ lens (20) that focuses the beams reflected by the rotary polygon mirror (15);
first and second polarization beams splitters (21,22), each of which transmits or reflects the beams passing through the f-θ lens (20) depending on the direction of polarization; and
first through fourth photoconductive units (31,32,33,34) on which the beams reflected and transmitted through the first and second polarization beam splitters (21,22) are incident;
**characterised in that**:
the first and second laser diodes (1,2) emit beams of one polarization, the lighting unit (10) further includes a polarization prism (5) for transmitting or reflecting incident beams depending on the direction of polarization, and the third and fourth laser diodes (3,4) are disposed in a different direction from the first and second laser diodes (1,2) with respect to the polarization prism (5) such that beams emitted by said first and third diodes are emitted from said lighting unit along a first same path and beams emitted by said second and fourth diodes are emitted from said lighting unit along a second same path;
the rotary polygon mirror (15) reflects the beams emitted along the said same paths from the lighting unit (10); and
the lengths of optical paths between the f-θ lens (20) and each of the first through fourth photoconductive units (31,32,33,34) are equal to one another.

2. The color laser printer of claim 1, wherein the first and second polarization beam splitters (21,22) are disposed in a V-shape.

3. The color laser printer of claim 1 or 2, further comprising an optical path changing means (35,36) disposed in paths along which the beams transmitted through the first and second polarization beam splitters (21,22) respectively travel.

4. A color laser printer for producing a color image using a single laser scanning unit, the color laser printer comprising:
a lighting unit (10) including first and second laser diodes (1,2) and third and fourth laser diodes (3,4);
a rotary polygon mirror (55) that reflects the beams from the lighting unit (50);
an f-θ lens (60) that focuses the beams reflected by the rotary polygon mirror (55);
a first optical path changing means (65) that divides the beams passing through the f-θ lens (60) into first and second beams travelling along two optical paths;
first and second polarization beam splitters (67,68), each of which transmits or reflects the first and second beams divided by the first optical path changing means (65) depending on the direction of polarization; and
first through fourth photoconductive units (71,72,73,74) on which the beams reflected and transmitted through the first and second polarization beam splitters (67,68) are incident;
wherein
the first and second laser diodes (1,2) emit beams of one polarization, the lighting unit (10) further includes a polarization prism (5) for transmitting or reflecting incident beams depending on the direction of polarization, and the third and fourth laser diodes (3,4) are disposed in a different direction from the first and second laser diodes (1,2) with respect to the polarization prism (5) such that beams emitted by said first and third diodes are emitted from said lighting unit along a first same path and beams emitted by said second and fourth diodes are emitted from said lighting unit along a second same path;
the rotary polygon mirror (55) reflects the beams emitted along the said same paths from the lighting unit (50); and
the lengths of optical paths between the f-θ lens (60) and each of the first through fourth photoconductive units (71,72,73,74) are equal to one another.

5. The color laser printer of claim 4, wherein the first optical path changing means (65) has a triangular or wedged cross-section.

6. The color laser printer of claim 4 or 5, further comprising second and third optical path changing means (75,76) disposed in paths along which the beams reflected through the first and second polarization beam splitters (67,68) respectively travel.

7. The color laser printer of claim 6, further comprising transmission-type plate glasses (79,80) disposed between the first polarization beam splitter (67) and the second optical path changing means (75) and between the second polarization beam splitter (68) and the third optical path changing means (76).

8. The color laser printer of any of claims 4 to 7, further comprising fourth and fifth optical path changing means (77,78) disposed in paths along which the beams transmitted through the first and second polarization beam splitters (67,68) respectively travel.

9. The color laser printer of any preceding claim, further comprising collimating lenses (7) respectively disposed between the polarization prism (5) and the first, second, third, and fourth laser diodes (1,2,3,4).

10. The color laser printer of claim 9, further comprising a cylindrical lens (8) disposed between the polarization prism (5) and the rotary polygon mirror (15,55).

## Patentansprüche

1. Farblaserdrucker zum Herstellen eines Farbbilds unter Verwendung einer einzelnen Laserabtasteinheit, wobei der Farblaserdrucker aufweist:
eine Beleuchtungseinheit (10), umfassend eine erste und zweite Laserdiode (1, 2) und eine dritte und vierte Laserdiode (3, 4);
einen sich drehenden Polygonspiegel (15), der die Strahlen von der Beleuchtungseinheit (10) reflektiert;
eine f-θ-Linse (20), die die Strahlen, reflektiert durch den sich drehenden Polygonspiegel (15), fokussiert;
einen ersten und einen zweiten Polarisationsstrahlteiler (21, 22), wobei jeder davon die Strahlen, die durch die f-θ-Linse (20) hindurchführen, in Abhängigkeit von der Richtung der Polarisation transmittiert oder reflektiert; und
erste bis vierte fotoleitende Einheiten (31, 32, 33, 34), auf die die Strahlen, reflektiert und transmittiert durch den ersten und den zweiten Polarisationsstrahlteiler (21, 22), einfallen;
**dadurch gekennzeichnet, dass**
die erste und die zweite Laserdiode (1, 2) Strahlen einer Polarisation emittieren, die Beleuchtungseinheit (10) weiterhin ein Polarisationsprisma (5) zum Transmittieren oder Reflektieren von einfallenden Strahlen, in Abhängigkeit von der Richtung einer Polarisation, umfasst, und die dritte und die vierte Laserdiode (3, 4) in einer unterschiedlichen Richtung zu der ersten und der zweiten Laserdiode (1, 2) in Bezug auf das Polarisationsprisma (5) so angeordnet sind, dass Strahlen, emittiert durch die erste und die dritte Diode, von der Beleuchtungseinheit entlang eines ersten, selben Wegs emittiert werden und Strahlen, emittiert durch die zweite und die vierte Diode, von der Beleuchtungseinheit entlang eines zweiten, selben Wegs emittiert werden;
der sich drehende Polygonspiegel (15) die Strahlen, emittiert entlang desselben Wegs von der Beleuchtungseinheit (10), reflektiert; und
die Längen der optischen Wege zwischen der f-θ-Linse (20) und jeder der ersten bis vierten fotoleitenden Einheit (31, 32, 33, 34) gleich zueinander sind.

2. Farblaserdrucker nach Anspruch 1, wobei der erste und der zweite Polarisationsstrahlteiler (21, 22) in einer V-Form angeordnet sind.

3. Farblaserdrucker nach Anspruch 1 oder 2, der weiterhin eine einen optischen Weg ändernde Einrichtung (35, 36), angeordnet in Wegen, entlang denen die Strahlen, transmittiert durch den ersten und den zweiten Polarisationsstrahlteiler (21, 22), jeweils laufen, aufweist.

4. Farblaserdrucker zum Erzeugen eines Farbbilds unter Verwendung einer einzelnen Laserabtasteinheit, wobei der Farblaserdrucker aufweist:
eine Beleuchtungseinheit (10), umfassend eine erste und zweite Laserdiode (1, 2) und eine dritte und vierte Laserdiode (3, 4);
einen sich drehenden Polygonspiegel (55), der die Strahlen von der Beleuchtungseinheit (50) reflektiert;
eine f-θ-Linse (60), die die Strahlen, reflektiert durch den sich drehenden Polygonspiegel (55), fokussiert;
eine erste einen optischen Weg ändernde Einrichtung (65), die die Strahlen, die durch die f-θ-Linse (60) hindurchführen, in erste und zweite Strahlen, die entlang von zwei optischen Wegen laufen, aufteilt;
einen ersten und einen zweiten Polarisationsstrahlteiler (67, 68), wobei jeder davon den ersten und den zweiten Strahl, aufgeteilt durch die den ersten optischen Weg ändernde Einrichtung (65), in Abhängigkeit von der Polarisationsrichtung, transmittiert oder reflektiert; und
erste bis vierte fotoleitende Einheiten (71, 72, 73, 74), auf die die Strahlen, reflektiert und transmittiert durch den ersten und den zweiten Polarisationsstrahlteiler (67, 68), einfallen;
wobei die erste und die zweite Laserdiode (1, 2) Strahlen einer Polarisation emittieren, wobei die Beleuchtungseinheit (10) weiterhin ein Polarisationsprisma (5) zum Transmittieren oder Reflektieren einfallender Strahlen in Abhängigkeit von der Richtung einer Polarisation umfasst und wobei die dritte und die vierte Laserdiode (3, 4) in einer unterschiedlichen Richtung zu der ersten und zweiten Laserdiode (1, 2) in Bezug auf das Polarisationsprisma (5) so angeordnet sind, dass Strahlen, emittiert durch die erste und die dritte Diode, von der Beleuchtungseinheit entlang eines ersten, selben Wegs emittiert werden, und Strahlen, emittiert durch die zweite und die vierte Diode, von der Beleuchtungseinheit entlang eines zweiten, selben Wegs emittiert werden;
der sich drehende Polygonspiegel (55) die Strahlen, emittiert entlang desselben Wegs von der Beleuchtungseinheit (50), reflektiert; und
die Längen der optischen Wege zwischen der f-θ-Linse (60) und jeder der ersten bis vierten fotoleitenden Einheit (71, 72, 73, 74) gleich zueinander sind.

5. Farblaserdrucker nach Anspruch 4, wobei die den ersten optischen Weg ändernde Einrichtung (65) einen dreieckförmigen oder keilförmigen Querschnitt besitzt.

6. Farblaserdrucker nach Anspruch 4 oder 5, der weiterhin eine zweite und eine dritte einen optischen Weg ändernde Einrichtung (75, 76), angeordnet in Wegen, entlang denen die Strahlen, reflektiert durch den ersten und den zweiten Polarisationsstrahlteiler (67, 68), jeweils laufen, aufweist.

7. Farblaserdrucker nach Anspruch 6, der weiterhin Plattengläser (79, 80) vom Transmissions-Typ, angeordnet zwischen dem ersten Polarisationsstrahlteiler (67) und der zweiten den optischen Weg ändernden Einrichtung (75) und zwischen dem zweiten Polarisationsstrahlteiler (68) und der dritten den optischen Weg ändernden Eichrichtung (76) aufweist.

8. Farblaserdrucker nach einem der Ansprüche 4 bis 7, der weiterhin eine vierte und eine fünfte den optischen Weg ändernde Einrichtung (77, 78), angeordnet in Wegen, entlang denen die Strahlen, transmittiert durch den ersten und den zweiten Polarisationsstrahlteiler (67, 68), jeweils laufen, aufweist.

9. Farblaserdrucker nach einem vorhergehenden Anspruch, der weiterhin Kollimationslinsen (7), jeweils angeordnet zwischen dem Polarisationsprisma (5) und der ersten, der zweiten, der dritten und der vierten Laserdiode (1, 2, 3, 4), aufweist.

10. Farblaserdrucker nach Anspruch 9, der weiterhin eine Zylinderlinse (8), angeordnet zwischen dem Polarisationsprisma (5) und dem sich drehenden Polygonspiegel (15, 55), aufweist.

## Revendications

1. Imprimante laser couleur pour produire une image en couleur à l'aide d'un seul dispositif de balayage laser, l'imprimante laser couleur comprenant :
un dispositif d'éclairage (10) comportant une première et une deuxième diodes laser (1, 2) et une troisième et une quatrième diodes laser (3, 4) ;
un miroir rotatif polygonal (15) qui réfléchit les faisceaux venant du dispositif d'éclairage (10) ;
une lentille f-θ (20) qui concentre les faisceaux réfléchis par le miroir rotatif polygonal (15) ;
un premier et un deuxième diviseurs (21, 22) de faisceaux de polarisation dont chacun transmet ou réfléchit les faisceaux traversant la lentille f-θ (20) en fonction du sens de polarisation ; et
des premier à quatrième dispositifs photoconducteurs (31, 32, 33, 34) que viennent frapper les faisceaux réfléchis et transmis par l'intermédiaire des premier et deuxième diviseurs (21, 22) de faisceaux de polarisation ;
**caractérisée en ce que** :
les première et deuxième diodes laser (1, 2) émettent des faisceaux à une première polarisation, le dispositif d'éclairage (10) comporte en outre un prisme de polarisation (5) pour transmettre ou réfléchir des faisceaux incidents en fonction du sens de polarisation, et les troisième et quatrième diodes laser (3, 4) sont disposées dans une direction différente de celle des première et deuxième diodes laser (1, 2) par rapport au prisme de polarisation (5) de façon que les faisceaux émis par lesdites première et troisième diodes soient émis depuis ledit dispositif d'éclairage suivant un premier trajet identique et que les faisceaux émis par lesdites deuxième et quatrième diodes soient émis depuis ledit dispositif d'éclairage suivant un deuxième trajet identique ;
le miroir rotatif polygonal (15) réfléchit les faisceaux émis sur lesdits trajets identiques depuis le dispositif d'éclairage (10) ; et
les longueurs des trajets optiques entre la lentille f-θ (20) et chacun des premier à quatrième dispositifs autoconducteurs (31, 32, 33, 34) sont égales les unes aux autres ;

2. Imprimante laser couleur selon la revendication 1, dans laquelle les premier et deuxième diviseurs (21, 22) de faisceaux de polarisation sont disposés en V.

3. Imprimante laser couleur selon la revendication 1 ou 2, comprenant en outre un moyen de changement (35, 36) de trajets optiques disposé sur des trajets sur lesquels se propagent respectivement les faisceaux transmis par l'intermédiaire des premier et deuxième diviseurs (21, 22) de faisceaux de polarisation ;

4. Imprimante laser couleur pour produire une image en couleur à l'aide d'un unique dispositif de balayage laser, l'imprimante laser couleur comprenant :
un dispositif d'éclairage (10) comprenant une première et une deuxième diodes laser (1, 2) et une troisième et une quatrième diodes laser (3, 4) ;
un miroir rotatif polygonal (55) qui réfléchit les faisceaux venant du dispositif d'éclairage (50) ;
une lentille f-θ (60) qui concentre les faisceaux réfléchis par le miroir rotatif polygonal (55) ;
un premier moyen de changement (65) de trajets optiques qui divise les faisceaux traversant la lentille f-θ (60) en un premier et un deuxième faisceaux se propageant sur deux trajets optiques ;
un premier et un deuxième diviseurs (67, 68) de faisceaux de polarisation dont chacun transmet ou réfléchit les premier et deuxième faisceaux divisés par le premier moyen de changement (65) de trajet optique en fonction du sens de polarisation ; et
des premier à quatrième dispositifs photoconducteurs (71, 72, 73, 74) que viennent frapper les faisceaux réfléchis et transmis par l'intermédiaire des premier et deuxième diviseurs (67, 68) de faisceaux de polarisation ;
les première et deuxième diodes laser (1, 2) émettant des faisceaux à une même polarisation, le dispositif d'éclairage (10) comportant en outre un prisme de polarisation (5) pour transmettre ou réfléchir les faisceaux incidents selon le sens de polarisation, et les troisième et quatrième diodes laser (3, 4) étant disposées dans une direction différente de celle des première et deuxième diodes laser (1, 2) par rapport au prisme de polarisation (5) de façon que les faisceaux émis par lesdites première et troisième diodes soient émis depuis ledit dispositif d'éclairage suivant un premier trajet identique et que les faisceaux émis par les deuxième et quatrième diodes soient émis depuis ledit dispositif d'éclairage sur un second trajet identique ;
le miroir rotatif polygonal (55) réfléchit les faisceaux émis sur lesdits mêmes trajets depuis le dispositif d'éclairage (50) ; et
les longueurs des trajets optiques entre la lentille f-θ (60) et chacun des premier à quatrième dispositifs photoconducteurs (71, 72, 73, 74) sont égales les unes aux autres.

5. Imprimante laser couleur selon la revendication 4, dans laquelle le premier moyen de changement (65) de trajet optique a une section transversale triangulaire ou en coin.

6. Imprimante laser couleur selon la revendication 4 ou 5, comprenant en outre un deuxième et un troisième moyens (75, 76) de changement de trajets optiques disposés sur des trajets sur lesquels se propagent respectivement les faisceaux réfléchis par l'intermédiaire des premier et deuxième diviseurs de faisceaux de polarisation ;

7. Imprimante laser couleur selon la revendication 6, comprenant en outre des plaques de verre (79, 80) du type à transmission disposées entre le premier diviseur (67) de faisceaux de polarisation et le deuxième moyen (75) de changement de trajet optique et entre le deuxième diviseur (68) de faisceaux de polarisation et le troisième moyen de changement (76) de trajet optique ;

8. Imprimante laser couleur selon l'une quelconque des revendications 4 à 7, comprenant en outre un quatrième et un cinquième moyens (77, 78) de modification de trajets optiques disposés sur des trajets sur lesquels se propagent respectivement les faisceaux transmis par l'intermédiaire des premier et deuxième diviseurs (67, 68) de faisceaux de polarisation ;

9. Imprimante laser couleur selon l'une quelconque des revendications précédentes, comprenant en outre des lentilles collimatrices (7) respectivement disposées entre le prisme de polarisation (5) et les première, deuxième, troisième et quatrième diodes laser (1, 2, 3, 4) ;

10. Imprimante laser couleur selon la revendication 9, comprenant en outre une lentille cylindrique (8) disposée entre le prisme de polarisation (5) et le miroir rotatif polygonal (15, 55).
